# EUROPÄISCHE PATENTANMELDUNG

(11) **EP 0 556 698 A2**
(43) Veröffentlichungstag der Anmeldung: **25.08.1993**
(21) Anmeldenummer: 93102013.5
(22) Anmeldetag: 09.02.1993
(51) Int. Cl.: F24C 15/16, A47J 43/18

(54) **Brat- und Grillgutaufnahmevorrichtung, insbesondere für Geflügel**

(30) Priorität: 21.02.1992 DE 4205361
(71) Anmelder: Convotherm-Elektrogeräte GmbH, D-82436 Eglfing (DE)
(72) Erfinder: Eichner, Albert, W-8121 Sindelsdorf (DE)
(74) Vertreter: Zmyj, Erwin, Dipl.-Ing., Dipl.-Wirtsch.-Ing.

(57) **Zusammenfassung**

Die Brat- und Grillgutaufnahmevorrichtung (10) weist einen Rost (6) auf, der einen Rahmen (7) und parallel nebeneinander liegende Roststäbe (8) umfaßt. Am Rahmen (7) und den Roststäben (8) sind V-förmige Halter (9) befestigt, die mit der Spitze nach oben stehen und unter einem Winkel von vorzugsweise 60° zur Rostebene geneigt sind. Die Halter (9) der einzelnen Reihen sind zueinander so versetzt, daß die Halter jeder zweiten Reihe miteinander fluchten.

## Beschreibung

Die Erfindung bezieht sich auf eine Brat- und Grillgutaufnahmevorrichtung, insbesondere für Geflügel mit einem ebenen, mehrere Roststäbe aufweisenden Rost zur Aufnahme des Geflügels.

Mehrzweckgeräte, insbesondere für Großküchen, die mit Heißluft oder einem Heißluft-Dampfgemisch betrieben werden und zum Braten, Grillen, Kochen, Auftauen usw. von Lebensmitteln dienen, weisen Einschübe zur Aufnahme von Pfannen oder Rosten auf, um die zu behandelnden Lebensmittel aufzunehmen. Beim Braten oder Grillen von Hähnchen werden diese auf Roste nebeneinander aufgelegt und in das Mehrzweckgerät eingeschoben. Hierbei treten zahlreiche Nachteile auf. Durch das Auflegen der Hähnchen auf die ebenen Roste bleibt der sich beim Grillen oder Braten bildende Saft im Hähnchen und bereitet beim Entnehmen derselben Schwierigkeiten, weil dieser Saft beim Entnehmen der Hähnchen aus den Hähnchen herausläuft und die Umgebung des Gerätes verschmutzt. Weiterhin kann die Haut der Hähnchen an den Gitterroststäben hängenbleiben, wodurch sie beim Entnehmen der Hähnchen zerstört wird. Die Hähnchen werden dadurch unansehnlich. Nachteilig ist außerdem, daß die Hähnchen einzeln entnommen werden müssen, was einen erhöhten Zeitaufwand mit sich bringt. Besonders nachteilig ist auch die Tatsache, daß der Rauminhalt dieser Mehrzweckgeräte nicht optimal genutzt werden kann, weil bei zu eng nebeneinanderliegenden Hähnchen diese nicht gleichmäßig braun werden. Durch das Auflegen der Hähnchen auf die Roste ergibt sich zwangsläufig auch eine ungleichmäßige Verteilung, mit der Folge, daß bei dichter nebeneinanderliegenden Hähnchen die Bratzeit höher ist als bei freiliegenden Hähnchen, so daß diese unterschiedlich schnell gar werden.

Aufgabe der Erfindung ist es, eine Brat- und Grillgutaufnahmevorrichtung, insbesondere für Geflügel zu schaffen, die bei der Verwendung in Mehrzweckgeräten eine leichtere, schnellere und sauberere Handhabung der Hähnchen ohne Zerstörung der Haut derselben sowie eine bessere Ausnutzung des Raumvolumens des Gerätes und kürzere Garzeiten ermöglichen.

Diese Aufgabe wird ausgehend von einer Brat- und Grillgutaufnahmevorrichtung der Eingangs erläuterten Art erfindungsgemäß dadurch gelöst, daß an den Roststäben einschließlich des Rahmens des Rostes im wesentlichen V-förmige Halter mit der Spitze nach oben vom Rost abstehend angebracht sind.

Aufgrund dieser Ausgestaltung ist es möglich, das Geflügel, insbesondere Hähnchen auf die Halter in einem genau vorgegebenen Anordnungsmuster auf jedem einzelnen Rost zu verteilen, wodurch gewährleistet ist, daß das vorhandene Volumen des Gerätes optimal genutzt werden kann, ohne daß die Hähnchen zu eng nebeneinander liegen. Vielmehr wird ein ausreichender gleichmäßiger Abstand zwischen den einzelnen Hähnchen sichergestellt, wodurch eine gleichmäßige Bräunung bei untereinander gleicher Garzeit gewährleistet ist. Da die Halter V-förmig ausgebildet und mit ihrer Spitze nach oben angeordnet sind, ist ein fester Sitz der Hähnchen auf den Haltern gegeben, so daß diese sich nicht mehr verschieben können und somit der gegenseitige Abstand unverändert bleibt. Außerdem kann durch die senkrechte oder schräge Anordnung der Hähnchen der sich beim Braten oder Grillen bildende Saft aus den Hähnchen in eine unter den Rosten im Gerät vorgesehene Auffangwanne abtropfen, so daß beim Entnehmen der Hähnchen kaum noch mit Verschmutzungen der Umgebung des Gerätes zu rechnen ist. Da die Hähnchen fest auf den Haltern aufgesteckt sind, kann jeweils ein Rost mit allen darauf befindlichen Hähnchen aus dem Gerät entnommen und die Hähnchen durch Schrägstellen des Rostes abgekippt werden, was durch die V-Form der Halter begünstigt wird. Ein Festkleben der Haut kann nun nicht mehr eintreten, da diese nicht mehr mit Roststäben in Berührung kommt.

Eine besonders günstige Anordnung der Hähnchen auf dem Rost innerhalb des Gerätes hinsichtlich der Packungsdichte und der Verringerung der Garzeit ergibt sich, wenn in weiterer Ausgestaltung der Erfindung die Halter unter einem Winkel zwischen 40 und 70° zur Rostebene geneigt angeordnet sind.

Eine konstruktiv und leicht auszuführende Ausgestaltung ergibt sich in weiterer Ausgestaltung der Erfindung dadurch, daß der Rost quer zur Einschubrichtung parallel zueinander verlaufende Roststäbe aufweist, an denen die Halter angeordnet sind. Bei entsprechender Bemessung der einzelnen Roststäbe sind zusätzliche, beispielsweise quer verlaufende Stützstäbe, nicht erforderlich, so daß sich ein einfach aufgebauter und leicht zu reinigender Rost mit den daran befestigten Haltern ergibt.

Wenn in weiterer Ausgestaltung der Erfindung die Halter der jeweils nachfolgenden Reihe gegenüber den Haltern der vorhergehenden Reihe seitlich versetzt angeordnet sind, so läßt sich hierdurch eine besonders günstige Ausnutzung des vorhandenen Raumes unter Beibehaltung gleichmäßiger Abstände zwischen den Hähnchen erzielen.

Besonders vorteilhaft ist es, wenn gemäß einer anderen Weiterbildung der Erfindung sämtliche Halter aller für ein Gerät vorgesehener Roste nach dem gleichen Anordnungsmuster und mit gleicher Neigung angeordnet sind. Hierdurch ist nicht nur die Herstellung solcher Roste mit Haltern vereinfacht, sondern die Roste lassen sich besonders platzsparend aufeinanderlegen, wobei die Grundrahmen unmittelbar aufeinanderliegen und nur durch die jeweilige Dicke der Halter gegeneinander versetzt sind, die im gestapelten Zustand jeweils in einer Reihe hintereinander eng aneinander anliegen.

Die Erfindung wird nachfolgend anhand eines in der Zeichnung dargestellten Ausführungsbeispieles näher erläutert. In der Zeichnung zeigen:
- Figur 1 :: ein Mehrzweckgerät bei offener Beschickungstür mit einer eingesetzten Brat- und Grillgutaufnahmevorrichtung;
- Figur 2:: eine schaubildliche Darstellung einer Brat- und Grillgutaufnahmevorrichtung;
- Figur 3:: eine Seitenansicht der Aufnahmevorrichtung nach Figur 2; und
- Figur 4:: zwei aufeinander gestapelte Brat- und Grillgutaufnahmevorrichtungen in schaubildlicher Darstellung.

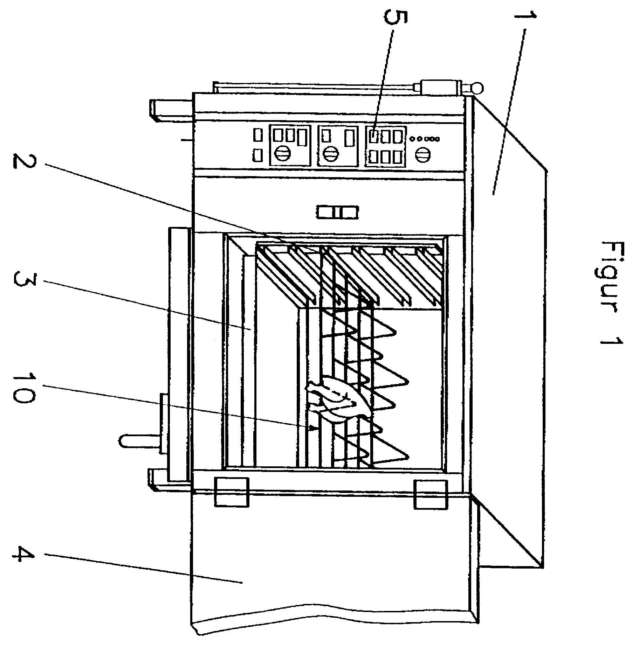

Die Brat- und Grillgutaufnahmevorrichtung nach der Erfindung ist insbesondere für ein Mehrzweckgerät vorgesehen, wie es beispielsweise in Figur 1 dargestellt ist. Dieses Gerät weist ein gegen Wärmeabstrahlung isoliertes Gehäuse 1 auf, in dessen Innenraum an den Seitenwänden Einschübe 2 für die Aufnahme von Rosten vorgesehen sind. Am Boden befindet sich eine Auffangwanne 3 für herabtropfendes Fett und Kondensat. Dieses Gerät ist an seiner Frontseite durch eine Tür 4 verschließbar und wird mit Heißluft oder einem Heißluft-Dampfgemisch betrieben, um die auf den einzelnen Rosten aufgelegten Nahrungsmittel zu braten, grillen, dämpfen, aufzutauen oder zu regenerieren. Zur Einstellung des jeweiligen Programms sind an einer, an der Vorderseite angebrachten Blende die Bedienungsknöpfe 5 angeordnet, um Temperatur, die Behandlungszeit und den Zusatz von Dampf einzustellen.

In Figur 1 ist aus Gründen der besseren Übersichtlichkeit nur eine Brat- und Grillgutaufnahmevorrichtung (10) gezeigt, die in einen Einschub 2 in das Gerät eingeschoben ist. Selbstverständlich werden in ein solches Gerät in jeden der Einschübe 2 entsprechende Aufnahmevorrichtungen eingesetzt.

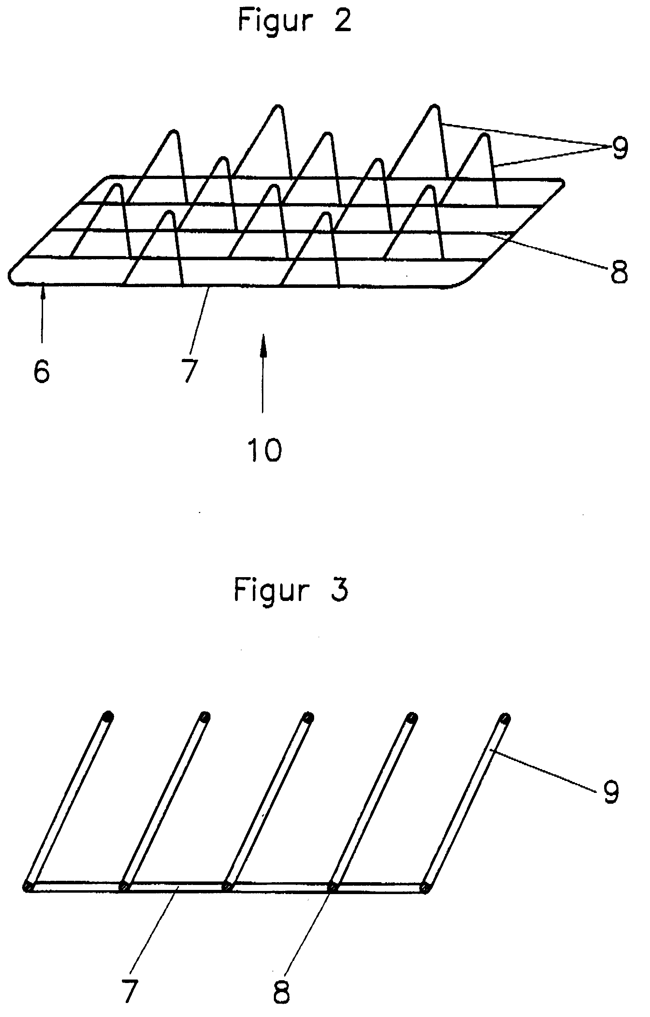

Wie in Verbindung mit den Figuren 2 und 3 ersichtlich, besteht jede Brat- und Grillgutaufnahmevorrichtung (10) aus einem Rost 6 mit umlaufendem Rahmen 7 und quer zur Einschubrichtung parallel mit Abstand zueinander am Rahmen befestigten Roststäben 8. Sowohl am Rahmen 7 als auch an den Roststäben 8 sind V-förmige Halter 9 befestigt, deren Spitze nach oben gerichtet sind, und die, wie insbesondere aus Figur 3 ersichtlich, etwa unter einem Winkel von 60° zur Rostebene geneigt sind. Die einzelnen Halter 9 sind in den aufeinanderfolgenden Reihen seitlich zueinander versetzt, so daß jeweils die Halter jeder zweiten Reihe miteinander fluchten. Auf diese Halter 9 werden die Hähnchen, wie in Figur 1 angedeutet, aufgeschoben, so daß sie zur Vertikalen geneigt auf den V-förmigen Haltern aufgesteckt sind und während der Garzeit einen ausreichend festen Sitz auf diesen sich nach unten erweiternden Halter haben, so daß eine Verschiebung nicht eintritt. Hierdurch ist es möglich, die einzelnen Hähnchen unter sehr guter Raumausnutzung eng und dennoch mit einem ausreichenden Abstand zueinander anzuordnen, um den Zutritt von Heißluft nicht zu behindern, wodurch eine kürzere Garzeit und eine gleichmäßigere Bräunung erzielbar ist, als dies der Fall ist, wenn die Hähnchen nebeneinander auf einem ebenen Rost liegen.

Die auf die einzelnen Halter 9 aufgesteckten Hähnchen können gemeinsam beim Herausziehen der insgesamt mit 10 bezeichneten Brat- und Grillgutaufnahmevorrichtung aus dem Gerät 1 herausgenommen und in eine Pfanne oder auf den Tisch abgekippt werden, wobei die V-Form der Halter dieses Abkippen erleichtert. Ein Lösen von Haltevorrichtungen, wie dies bei Grillspießen der Fall ist, ist hier nicht notwendig.

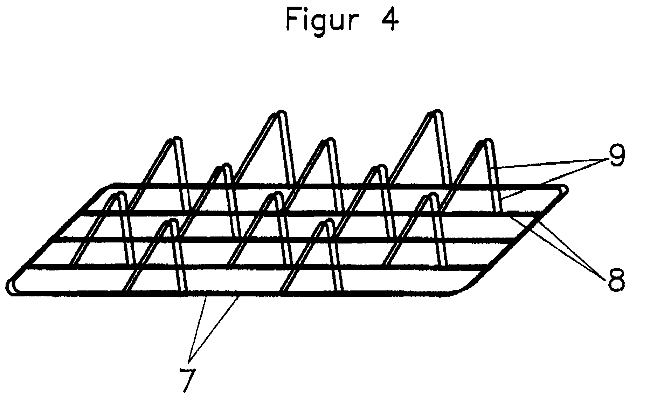

Wenn die einzelnen Brat- und Grillgutaufnahmevorrichtungen 10 untereinander gleich ausgeführt werden, so können sie besonders platzsparend übereinander gestaptelt werden, wie dies aus Figur 4 ersichtlich ist. Dabei sind die jeweiligen Aufnahmevorrichtungen nur um die Dicke der Halter 9 in horizontaler Richtung und entsprechend der Dicke des Rostes 6 in vertikaler Richtung versetzt, so daß ein Paket mehrerer ineinander gesteckter Brat- und Grillgutaufnahmevorrichtungen nicht wesentlich mehr Platz einnimmt, als dies bei einer einzelnen Aufnahmevorrichtung der Fall ist.

## Patentansprüche

1. Brat- und Grillgutaufnahmevorrichtung, insbesondere für Geflügel, mit einem ebenen, mehrere Roststäbe aufweisenden Rost zur Aufnahme des Geflügels, **dadurch gekennzeichnet,** daß an den Roststäben (8) einschließlich des Rahmens (7) des Rostes (6) im wesentlichen V-förmige Halter (9) mit der Spitze nach oben vom Rost (6) abstehend angebracht sind.

2. Aufnahmevorrichtung nach Anspruch 1 , dadurch gekennzeichnet, daß die Halter (9) unter einem Winkel zwischen 40 und 70° zur Rostebene geneigt, angeordnet sind.

3. Aufnahmevorrichtung nach Anspruch 1 oder 2, dadurch gekennzeichnet, daß der Rost (6) quer zur Einschubrichtung parallel zueinander verlaufende Roststäbe (8) aufweist, an denen die Halter (9) angeordnet sind.

4. Aufnahmevorrichtung nach einem der Ansprüche 1 bis 3, dadurch gekennzeichnet, daß die Halter (9) der jeweils nachfolgenden Reihe gegenüber den Haltern (9) der vorhergehenden Reihe seitlich versetzt angeordnet sind.

5. Aufnahmevorrichtung nach einem der Ansprüche 1 bis 4, dadurch gekennzeichnet, daß sämtliche Halter (9) aller für ein Gerät vorgesehener Roste (6) nach dem gleichen Anordnungsmuster und mit gleicher Neigung angeordnet sind.
